# EUROPÄISCHE PATENTSCHRIFT

(11) **EP 1 248 006 B1**
(45) Veröffentlichungstag und Bekanntmachung des Hinweises auf die Patenterteilung: **30.06.2004**
(21) Anmeldenummer: 01108735.0
(22) Anmeldetag: 06.04.2001
(51) Int. Cl.: F16D 23/02

(54) **Synchronring**
Synchronizer ring
Anneau de synchronisation

(43) Veröffentlichungstag der Anmeldung: 09.10.2002
(73) Patentinhaber: Ford Global Technologies, LLC, Dearborn, MI 48126 (US)
(72) Erfinder: Mohr, Christian, 54290 Trier (DE); Lion, Thomas, 50859 Köln (DE); Schwerdtner, Michael, 50735 Köln (DE)
(74) Vertreter: Drömer, Hans-Carsten, Dipl.-Ing.

(56) Entgegenhaltungen:
- EP-A- 0 305 581
- DE-A- 19 858 987
- US-A- 5 038 628
- US-A- 5 478 642

## Beschreibung

Die Erfindung bezieht sich auf einen Synchronring in einer Synchronisiereinrichtung der im Oberbegriff des Patentanspruchs 1 erläuterten Art.

Aus der US 5 038 628 ist eine Synchronring nach dem Oberbegriff des Patentanspruches 1 bekannt, der zur besseren Ölversorgung seiner konischen Reibfläche auf derselben sowohl Umfangsnuten als auch Ölabstreifnuten aufweist. Neu gegenüber dem angegebenen Stand der Technik, bei dem die Umfangsnuten in Umfangsrichtung und die Ölabstreifnuten in Axialrichtung ausgerichtet sind, ist, daß die Nuten von der Umfangsrichtung bzw. der Axialrichtung abweichen und unter beliebigen Winkeln angeordnet sind. Diese Anordnung der Nuten dient der besseren Ölversorgung der Reibfläche während eines Schaltvorganges.

Im kalten, d. h. nicht betriebswarmen Zustand bildet sich auf der Reibfläche ein dicker Ölfilm aus, bedingt durch die Dickflüssigkeit des kalten Getriebeöles. Bei der Betätigung der Synchronisiereinrichtung in diesem Zustand wird zum Abbau des dicken Ölfilms eine sehr hohe Schaltkraft benötigt, die im Vergleich zur Schaltbetätigung im betriebswarmen Zustand als unangenehm empfunden wird. Durch die umlaufende Umfangsnut hält sich der Ölfilm länger auf der Reibfläche und kann durch die Ölabstreifnuten nicht sofort abgestreift werden.

Aus der EP 0 305 581 ist ein Synchronring bekannt, der Ölabstreifnuten und eine umlaufende Umfangsnut aufweist, die in einem auf den Synchronring aufgebrachten Reibbelag aus Papierbasis eingebracht sind. Dabei ist die Umfangsnut durch mehrere Brücken im Umfang unterbrochen. Dies dient jedoch nicht der Verbesserung der Schaltbarkeit, sondem nur der Verbindung der Belagteile des auf den Synchronring aufgebrachten Reibbelages.

Aufgabe der Erfindung ist es, die Schaltbarkeit der Synchronisiereinrichtung, vor allem während der Kaltstartphase eines Kraftfahrzeuges, zu verbessern.

Gelöst wird diese Aufgabe mit den kennzeichnenden Merkmalen des Anspruches 1.

Dadurch, daß zumindest eine Umfangsnut an mindestens einer Stelle am Umfang geschlossen ist, indem an dieser Stelle die Reibfläche eine Fläche und keine Nut aufweist, ist die Umfangsnut unterbrochen und der dicke Ölfilm wird bei Betätigung der Synchronisiereinrichtung schneller abgestreift. Die Schließung der Umfangsnut ist dabei so zu verstehen, daß die Reibfläche an dieser Stelle eine geschlossene Oberfläche aufweist, während die Umfangsnut an dieser Stelle unterbrochen ist. Die Umfangsnut wird nachträglich an dieser Stelle wieder geschlossen durch Materialauftrag, z. B. durch ein geeignetes Lotmaterial oder eine Kunststoffbeschichtung.

Vorteilhaft ist zumindest eine Umfangsnut auf einer Seite neben einer Ölabstreifnut geschlossen ist. Damit stellt die Ölabstreifnut eine ununterbrochene Nut dar und der Ölfilm kann schneller abgestreift werden.

Eine weiter vorteilhafte Ausführung sieht vor, daß zumindest eine Umfangsnut beidseitig einer Ölabstreifnut geschlossen ist. Dies hat den Vorteil, daß unabhängig davon, ob der Synchronring oder der mit der Reibfläche zusammenwirkende Ring schneller dreht, die Funktion der Ölabstreifnuten auf jeden Fall verbessert wird.

Bezüglich der Ausrichtung der Nuten ist dabei zu sagen, daß als Ölabstreifnuten vorwiegend axial ausgerichteten Nuten bezeichnet sind, d. h. der Winkel zwischen Ölabstreifnut und der Synchronringachse ist kleiner als 45°. Entsprechend werden die Nuten, die eine Winkel von größer 45° zur Synchronringachse aufweisen und die damit vorwiegend in Umfangsrichtung ausgerichtet sind, als Umfangsnuten bezeichnet.

Weitere erfinderische Merkmale können aus den Darstellungen eines erfindungsgemäßen Synchronringes in den Figuren entnommen werden. Es zeigen:
- Fig. 1: eine Draufsicht auf einen Synchronring;
- Fig. 2: einen Schnitt durch den Synchronring entlang der Linie I-I; und
- Fig. 3: eine vergrößerte Ansicht des Details A.

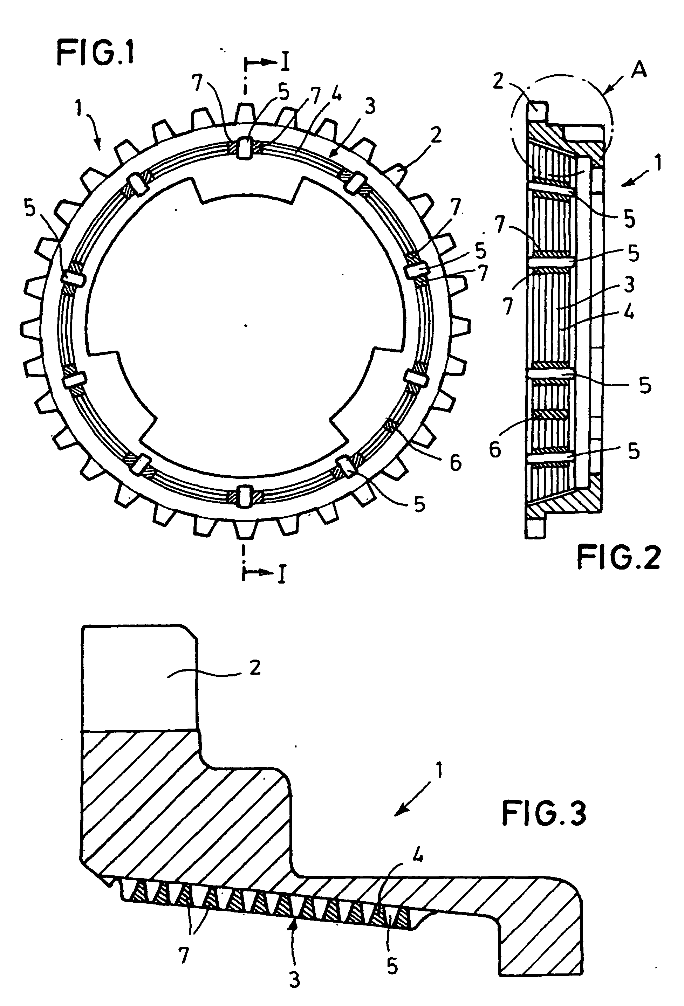

In Figur 1 ist die Draufsicht auf den erfindungsgemäßen Synchronring 1 gezeigt. Am äußeren Umfang ist die Sperrverzahnung 2 angeordnet. Die Reibfläche 3 weist mehrere Umfangsnuten 4 auf. Über den Umfang der Reibfläche 3 verteilt sind mehrere, in axialer Richtung ausgerichtete Ölabstreifnuten 5 angeordnet. Die Umfangsnuten sind an verschiedenen Stellen verschlossen. Der Verschluß 6 ist zwischen zwei Ölabstreifnuten 5 angeordnet, während die Verschlüsse 7 beidseitig direkt neben einer Ölabstreifnut 5 angeordnet sind.

Zur besseren Verständlichkeit ist in Figur 2 der Schnitt durch den Synchronring 1 entlang der Linie I-I gezeigt. Hier sind die Umfangsnuten 4 auf der Reibfläche 3 sowie die Ölabstreifnuten 5 besser erkenntlich.

Eine vergrößerte Ansicht des Details A, einen Schnitt durch den Synchronring 1 an einer Ölabstreifnut 5, zeigt Figur 3. Die Ölabstreifnut 5 unterbricht die Umfangsnuten 4 der Reibfläche 3. Durch den Verschluß 7 sind die Umfangsnuten 4 direkt neben der Ölabstreifnut 5 verschlossen. Dadurch kann bei der Betätigung der Synchronisiervorrichtung ein auf der Reibfläche 3 befindlicher Ölfilm sehr schnell abgestreift werden, da durch den Verschluß 7 das Öl nicht mehr in den Umfangsnuten 4 aufgenommen werden kann.

Der Verschluß 7 besteht hier aus einem Material, daß nach der Bearbeitung der Ölabstreifnut 5 und den Umfangsnuten 4 nachträglich auf die entsprechende Stelle aufgetragen wird. Vorzugsweise kommt dabei ein Material zum Einsatz, das weicher ist als das Material des Synchronringes 1 bzw. das Material des mit der Reibfläche 3 zusammenwirkenden, nicht dargestellten Ringes. Dann kann bei der Herstellung der Verschluß 7 ein geringes Übermaß aufweisen und über die Reibfläche 3 hinausstehen. Nach ein paar Schaltbetätigungen ist soviel Verschlußmaterial abgetragen, daß der Verschluß 7 mit der Reibfläche 3 eine Fläche bildet.

Die Anwendung der erfindungsgemäßen Ausgestaltung eines Synchronringes ist nicht auf den dargestellten Synchronring beschränkt. Vielmehr kann jeder Ring in einer Synchronisiereinrichtung, der eine Reibfläche mit Umfangsnuten und Ölabstreifnuten aufweist, mit den erfinderischen Merkmalen ausgestaltet sein.

## Patentansprüche

1. Synchronring (1) für eine Synchronsisiereinrichtung, insbesondere für ein Wechselgetriebe eines Kraftfahrzeuges, mit einer konischen Reibfläche (3) zum Herstellen eines Gleichlaufs zwischen zwei miteinander formschlüssig in Verbindung zu bringenden Schaltungselementen, wobei der Synchronring (1) auf der Reibfläche (3) mindestens eine vorwiegend in Umfangsrichtung ausgebildete Umfangsnut (4) und mindestens eine vorwiegend in axialer Richtung ausgerichtete Olabstreifnut (5) aufweist, wobei
zumindest eine Umfangsnut (4) an mindestens einer Stelle am Umfang geschlossen ist, indem an dieser Stelle die Reibfläche (3) eine Fläche und keine Nut aufweist, **dadurch gekennzeichnet, daß**
die Umfangsnut (4) durch nachträglichen Materialauftrag an dieser Stelle geschlossen ist.

2. Synchronring nach Anspruch 1,
**dadurch gekennzeichnet, daß**
zumindest eine Umfangsnut (4) auf einer Seite neben einer Ölabstreifnut (5) geschlossen ist.

3. Synchronring nach Anspruch 1,
**dadurch gekennzeichnet, daß**
zumindest eine Umfangsnut (4) beidseitig einer Ölabstreifnut (5) geschlossen ist.

## Claims

1. Synchronizer ring (1) for a sychronizer device, in particular for a variable-speed gear box of a motor vehicle, having a conical friction surface (3) for producing synchronization between two shifting elements which are to be connected to one another in a positively locking manner, the synchronizer ring (1), on the friction surface (3), having at least one circumferential groove (4) formed predominantly in the circumferential direction and at least one oil scraper groove (5) which is oriented predominantly in the axial direction, at least one circumferential groove (4) being closed at at least one location on the circumference by virtue of the friction surface (3) having a surface rather than a groove at this location, **characterized in that** the circumferential groove (4) is closed off by the subsequent application of material at this location.

2. Synchronizer ring according to Claim 1, **characterized in that** at least one circumerential groove (4) is closed on one side next to an oil scraper groove.

3. Synchronizer ring according to Claim 1, **characterized in that** at least one circumferential groove (4) is closed on both sides of an oil scraper groove (5).

## Revendications

1. Anneau de synchronisation (1) pour un dispositif de synchronisation, notamment pour une transmission à changement de vitesses d'un véhicule automobile, comprenant une surface de frottement conique (3) pour la réalisation d'un synchronisme entre deux éléments de commutation devant être amenés en liaison mutuelle par engagement positif, l'anneau de synchronisation (1) présentant, sur la surface de frottement (3), au moins une rainure périphérique (4) réalisée essentiellement dans la direction périphérique et au moins une rainure de raclage d'huile (5) orientée essentiellement dans la direction axiale, au moins une rainure périphérique (4) étant fermée au niveau d'au moins un emplacement sur la périphérie, la surface de frottement (3) présentant à cet endroit une surface et aucune rainure,
**caractérisé en ce que**
la rainure périphérique (4) est fermée à cet endroit par un apport de matériau ultérieur.

2. Anneau de synchronisation selon la revendication 1,
**caractérisé en ce qu'**au moins une rainure périphérique (4) est fermée d'un côté à côté d'une rainure de raclage d'huile (5).

3. Anneau de synchronisation selon la revendication 1,
**caractérisé en ce qu'**au moins une rainure périphérique (4) est fermée des deux côtés d'une rainure de raclage d'huile (5).
